# FASCICULE DE BREVET EUROPEEN

(11) **EP 3 158 146 B1**
(45) Date de publication et mention de la délivrance du brevet: **04.04.2018**
(21) Numéro de dépôt: 15738735.8
(22) Date de dépôt: 23.06.2015
(51) Int. Cl.: E04H 4/12, F04D 29/42

(54) **POMPE DE FILTRATION POUR PISCINE**
FILTERPUMPE FÜR EIN SCHWIMMBECKEN
FILTRATION PUMP FOR A SWIMMING POOL

(30) Priorité: 23.06.2014 FR 1455754
(43) Date de publication de la demande: 26.04.2017
(73) Titulaire: ACIS (Aqua Consult Industrie Services), 44310 Saint-Philbert de Grand Lieu (FR)
(72) Inventeur: LIE, Michaël, F-85210 Sainte-Hermine (FR)
(74) Mandataire: Jacobacci Coralis Harle
(86) Numéro de dépôt international: PCT/FR2015/051666
(87) Numéro de publication internationale: WO 2015/197967

(56) Documents cités:
- EP-A1- 0 544 610
- EP-A1- 2 113 705
- WO-A1-2013/093338
- DE-U1-202009 018 129

## Description

### DOMAINE TECHNIQUE AUQUEL SE RAPPORTE L'INVENTION

La présente invention concerne le domaine général des équipements de piscines ; elle concerne plus particulièrement les pompes de filtration pour piscines.

### ARRIERE-PLAN TECHNOLOGIQUE

Le recyclage de l'eau d'un bassin de piscine, en vue en particulier de sa filtration, s'effectue au moyen de pompes électriques.

Ces pompes de filtration comprennent un corps de pompe associé à un moteur électrique muni d'une roue à aubes. Ce corps de pompe est muni d'un orifice d'aspiration qui comporte des moyens pour permettre son raccordement à un raccord d'aspiration d'une tuyauterie d'arrivée d'eau, et d'un orifice de refoulement qui comporte des moyens pour permettre son raccordement à un raccord de refoulement d'une tuyauterie de sortie d'eau. Le circuit d'eau entre le bassin de la piscine et la pompe comporte une installation de filtration type bac à sable par exemple.

Il existe de nombreux modèles de telles pompes (voir par exemple EP-2 113 705 ou encore EP-0 544 610), mais, très généralement, leur corps comporte une embase pour son positionnement et sa fixation sur un support plan horizontal dédié ; l'axe de leur orifice d'aspiration est horizontal et ménagé sur l'avant du corps de pompe, en regard d'un logement pour un système de préfiltration (classiquement un panier amovible formant préfiltre), et leur orifice de refoulement est ménagé sur le dessus du corps de pompe, avec son axe vertical.

L'axe horizontal de l'orifice d'aspiration et l'axe vertical de l'orifice de refoulement s'étendent généralement dans le même plan vertical (correspondant au plan vertical médian du corps de pompe).

Les différences entre les modèles de pompes présents sur le marché résident notamment dans les types de moyens de raccordement aux raccords d'aspiration et de refoulement des tuyauteries d'arrivée et de sortie d'eau, et aussi dans les cotes de positionnement desdits orifices d'aspiration et de refoulement, à savoir :
- cote en hauteur de l'axe de l'orifice d'aspiration,
- cote en hauteur du plan horizontal de l'orifice de refoulement, et
- cote de longueur/distance entre l'axe de l'orifice de refoulement et le plan vertical de l'orifice d'aspiration ;
ces différentes cotes de positionnement pouvant varier de quelques millimètres ou de quelques centimètres d'un modèle de pompe à l'autre.

Lors d'une première installation, l'installateur construit le plan de tuyauterie en tenant compte du modèle de pompe choisi.

Ensuite, lorsqu'il est nécessaire de changer la pompe, l'opérateur doit effectuer ce remplacement par une pompe identique ; ou alors, s'il utilise un modèle de pompe différent, il doit modifier le positionnement des raccords d'aspiration et de refoulement des tuyauteries d'arrivée et de sortie d'eau, ce qui engendre des coûts supplémentaires en temps et en matériel.

### OBJET DE L'INVENTION

La présente invention a pour but de remédier à ces inconvénients en proposant une structure de pompe très polyvalente, apte à être configurée pour pouvoir être raccordée de manière simple et rapide sur des raccords existants d'aspiration et de refoulement, quelle que soit une grande partie des modèles de pompe utilisés auparavant.

Pour cela, cette pompe de filtration polyvalente pour piscine est du type comprenant un corps de pompe apte à reposer sur un support horizontal, lequel corps de pompe comporte un logement pour un système de préfiltration, ainsi que des moyens pour la réception d'un moteur, et est muni :
- d'un orifice d'aspiration, lequel orifice d'aspiration est positionné en regard dudit logement pour le système de préfiltration, et est prolongé par une structure cylindrique d'aspiration, d'axe horizontal, dont l'extrémité libre s'étend dans un plan vertical P1, et est munie de moyens pour son raccordement à un raccord d'aspiration, et
- d'un orifice de refoulement, lequel orifice de refoulement est prolongé par une structure cylindrique de refoulement, d'axe vertical, dont l'extrémité libre s'étend dans un plan horizontal P2, et est munie de moyens pour son raccordement à un raccord de refoulement ;
l'axe horizontal de ladite structure cylindrique d'aspiration est destiné à s'étendre selon une cote de hauteur C1 par rapport au support horizontal du corps de pompe ; le plan horizontal P2 de l'extrémité libre de ladite structure cylindrique de refoulement est destiné à s'étendre selon une cote de hauteur C2 par rapport au support plan horizontal ; et le plan vertical P1 de l'extrémité libre de ladite structure cylindrique d'aspiration et l'axe vertical de ladite structure cylindrique de refoulement sont séparés d'une cote de longueur C3.
D'autre part, les axes desdites structures cylindriques d'aspiration et de refoulement sont situés dans le même plan vertical P3.
Et conformément à la présente invention, pour obtenir la polyvalence recherchée, le corps de pompe comporte des moyens autorisant le réglage de ladite cote C1, des moyens autorisant le réglage de ladite cote C2 et des moyens autorisant le réglage de ladite cote C3, de manière continue, chacune sur une plage de valeur, et indépendamment les unes des autres.

Selon une forme de réalisation préférée, la structure cylindrique de refoulement comprend un raccord cylindrique de refoulement monté avec une possibilité de mobilité axiale au travers d'un joint d'étanchéité annulaire associé audit orifice de refoulement, pour permettre le réglage de la cote C2 précitée.
La structure cylindrique de refoulement comporte alors de préférence des moyens de compression pour comprimer de manière réversible ledit joint d'étanchéité entre le pourtour dudit orifice de refoulement et la surface externe dudit raccord cylindrique de refoulement, de manière à réaliser simultanément le verrouillage axial dudit raccord cylindrique de refoulement et l'étanchéité.

Toujours dans ce cadre, selon une forme de réalisation particulière, l'orifice de refoulement du corps de pompe se prolonge vers l'extérieur par un tronçon cylindrique de refoulement muni d'un taraudage, le diamètre interne de ce tronçon cylindrique de refoulement étant supérieur au diamètre dudit orifice de refoulement pour ménager un épaulement interne orienté vers l'extérieur ; en outre, les moyens de compression précités comprennent un écrou de serrage destiné à ceinturer ledit raccord cylindrique de refoulement et muni d'une extension comportant un filetage extérieur destiné à coopérer avec ledit taraudage dudit tronçon cylindrique de refoulement, de manière adaptée pour que son extrémité libre vienne comprimer, directement ou indirectement, ledit joint d'étanchéité contre ledit épaulement interne et contre la surface externe dudit raccord cylindrique de refoulement.

De préférence, une bague conique et ouverte de serrage est interposée entre ledit joint d'étanchéité et un pan incliné ménagé dans la surface interne de l'écrou de serrage.

D'autre part, toujours de manière avantageuse, le tronçon cylindrique de refoulement dudit orifice de refoulement est réalisé monobloc avec le corps de pompe.

Selon encore une autre particularité, la structure cylindrique d'aspiration comprend un raccord cylindrique d'aspiration monté avec une possibilité de mobilité axiale au travers d'un joint d'étanchéité annulaire associé audit orifice d'aspiration, pour permettre le réglage de la cote C3 précitée.

Dans ce cadre, la structure cylindrique d'aspiration comporte de préférence des moyens de compression pour comprimer de manière réversible le joint d'étanchéité entre le pourtour dudit orifice d'aspiration et la surface externe dudit raccord cylindrique d'aspiration, de manière à réaliser simultanément le verrouillage axial dudit raccord cylindrique d'aspiration et l'étanchéité.

L'orifice d'aspiration du corps de pompe se prolonge alors de préférence vers l'extérieur par un tronçon cylindrique d'aspiration muni d'un taraudage, le diamètre interne dudit tronçon cylindrique d'aspiration étant supérieur au diamètre dudit orifice d'aspiration pour ménager un épaulement interne orienté vers l'extérieur. En outre, lesdits moyens de compression comprennent un écrou de serrage destiné à ceinturer ledit raccord cylindrique d'aspiration et muni d'une extension comportant un filetage extérieur destiné à coopérer avec ledit taraudage dudit tronçon cylindrique d'aspiration, de manière adaptée pour que son extrémité libre vienne comprimer, directement ou indirectement, ledit joint d'étanchéité contre ledit épaulement interne et contre la surface externe dudit raccord cylindrique d'aspiration.

Toujours de préférence, une bague conique et ouverte de serrage est interposée entre ledit joint d'étanchéité et un pan incliné ménagé dans la surface interne dudit écrou de serrage.

Selon encore une autre particularité, l'orifice d'aspiration ménagé dans le corps de pompe est prévu surdimensionné par rapport au diamètre de ladite structure cylindrique d'aspiration ; d'autre part, la pompe comporte une platine intermédiaire portant ladite structure cylindrique d'aspiration, laquelle platine intermédiaire comporte des orifices pour sa fixation au moyen de vis sur ledit corps de pompe, lesquels orifices de fixation ont une forme oblongue dont le grand axe est orienté parallèlement au plan P3 précité et à l'axe de la structure cylindrique de refoulement, pour permettre un réglage de la cote C1 précitée.

Ladite platine intermédiaire comporte de préférence un orifice d'aspiration qui se prolonge par ledit tronçon cylindrique d'aspiration associé audit raccord cylindrique d'aspiration et auxdits moyens de compression.

Les raccords cylindriques d'aspiration et de refoulement comportent avantageusement une extrémité taraudée ou filetée pour leur raccordement respectif au raccord d'aspiration et au raccord de refoulement.

D'autre part, les raccords cylindriques d'aspiration et de refoulement comportent de préférence une structure saillante périphérique à section polygonale, pour leur maintien lors des opérations de vissage et de dévissage des raccords d'aspiration et de refoulement, et éventuellement des écrous de serrage associés.

L'invention sera encore illustrée, sans être aucunement limitée, par la description suivante d'une forme de réalisation particulière, donnée uniquement à titre d'exemple et représentée sur les dessins annexés dans lesquels :
- la figure 1 est une vue en perspective d'une pompe de filtration pour piscine conforme à l'invention, constituée d'un corps de pompe associé à un moteur électrique ;
- la figure 2 est une vue de face du corps de la pompe illustré sur la figure 1 ;
- la figure 3 est une vue de côté du corps de pompe de la figure 2 ;
- la figure 4 est une vue en coupe du corps de pompe, selon le plan de coupe 4-4 de la figure 2;
- la figure 5 est une vue agrandie d'une partie de la figure 4, détaillant les moyens de raccordement de l'orifice de refoulement au raccord de refoulement ;
- la figure 6 est une vue agrandie d'une partie de la figure 4, détaillant les moyens de raccordement de l'orifice d'aspiration au raccord d'aspiration ;
- la figure 7 est une vue en perspective éclatée des moyens de raccordement de l'orifice d'aspiration au raccord d'aspiration.

### DESCRIPTION DETAILLEE D'UN EXEMPLE DE REALISATION

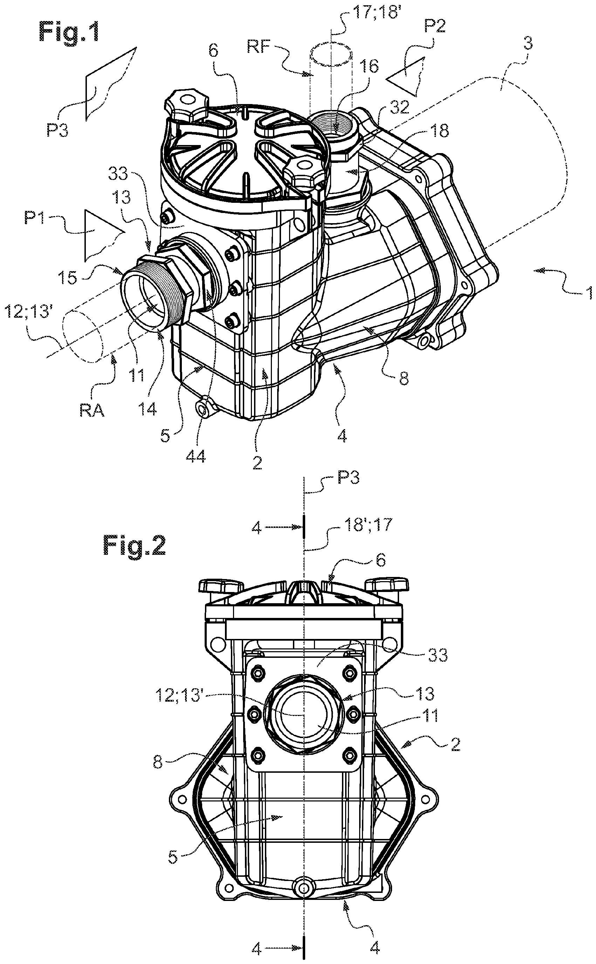

La figure 1 illustre en perspective une pompe de filtration 1 selon l'invention, comprenant un corps de pompe 2 associé à un moteur électrique 3 (illustré en pointillés), par exemple un moteur asynchrone deux pôles 1.1kw.
Sur les figures 2, 3 et 4, seul le corps de pompe 2 est représenté.

Ce corps de pompe 2 comporte une embase 4 permettant sa fixation sur un support S horizontal, au moyen de vis.

Il comprend une structure avant 5 globalement cylindrique, d'axe vertical, ouverte en partie supérieure et munie, à ce niveau, d'un capot d'obturation amovible 6. Cette structure avant cylindrique 5 définit un logement 7 destiné à recevoir un système de filtration, non représenté, formant préfiltre pour récupérer certains déchets/débris de l'eau de la piscine, en vue de protéger la roue à aubes du moteur électrique 3.

Cette structure avant cylindrique 5 du corps de pompe 2 se prolonge par une structure arrière 8, également globalement cylindrique, d'axe horizontal, définissant la chambre de pompage 9 proprement dite, destinée à recevoir le cône diffuseur et la roue à aubes du moteur électrique 3. Cette structure arrière 8 est également adaptée pour permettre la fixation du moteur électrique 3.

Les structures cylindriques avant 5 et arrière 8 du corps de pompe 2 sont en communication fluidique par l'intermédiaire d'une ouverture interne 10.

Le corps de pompe 2 comporte un orifice d'aspiration 11 d'axe horizontal 12 qui est ménagé dans la structure cylindrique avant 5, en regard du logement 7 pour le système de préfiltration ; cet orifice d'aspiration 11 se prolonge par une structure cylindrique d'aspiration 13, d'axe horizontal 13', dont l'extrémité libre 14 est munie de moyens 15 pour son raccordement à un raccord d'aspiration RA. Ce raccord d'aspiration RA, simplement représenté en pointillés sur la figure 1, fait partie intégrante du circuit de tuyauterie entre le bassin de piscine et la pompe 1.

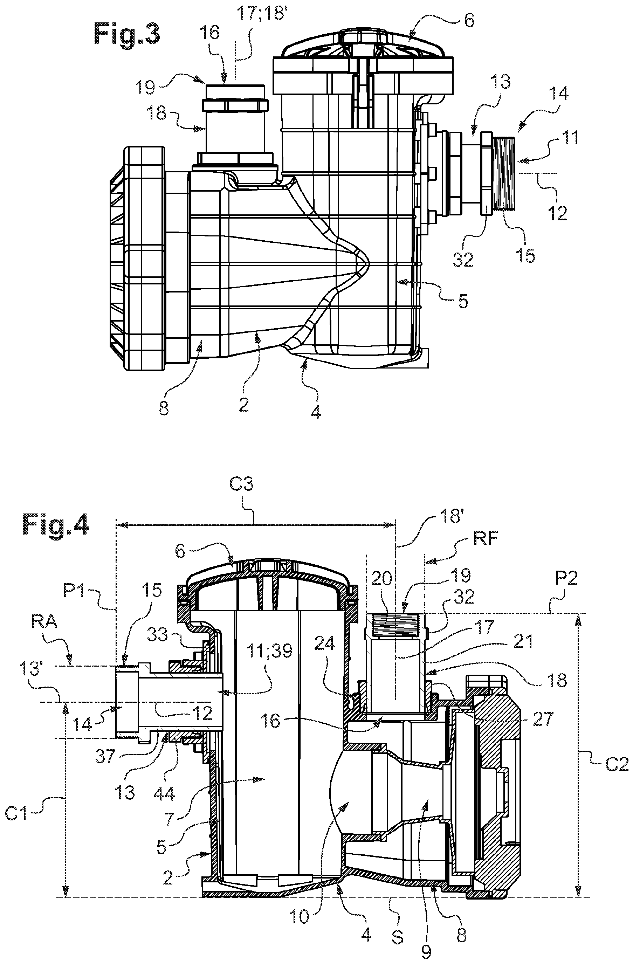

Comme on peut le voir sur les figures 1 et 4, l'extrémité libre 14 de cette structure cylindrique d'aspiration 13 s'étend dans un plan vertical P1.

D'autre part, la cote de hauteur de l'axe horizontal 13' de la structure cylindrique d'aspiration 13 par rapport au support horizontal S du corps de pompe 2 est repérée C1 sur la figure 4.

Le corps de pompe 2 comporte encore un orifice de refoulement circulaire 16, d'axe vertical 17, qui est ménagé dans la partie supérieure de la structure arrière 8 ; cet orifice de refoulement 16 est prolongé par une structure cylindrique de refoulement 18, d'axe vertical 18', dont l'extrémité libre 19 est munie de moyens 20 pour son raccordement à un raccord de refoulement RF.
Les axes verticaux 17 et 18' sont ici confondus.

Comme on peut le voir sur les figures 1 et 4, l'extrémité libre 19 de cette structure cylindrique de refoulement 18 s'étend dans un plan horizontal P2 ; et ce plan horizontal P2 est situé à une cote de hauteur C2 par rapport au support horizontal S du corps de pompe 2 (figure 4).

D'autre part, toujours sur la figure 4, on remarque que le plan vertical P1 de la structure cylindrique d'aspiration 13 est séparé de l'axe vertical 18' de la structure cylindrique de refoulement 18, d'une cote de longueur C3.

En outre, on remarque encore que l'axe horizontal 13' de la structure cylindrique d'aspiration 13, et l'axe 18' de la structure cylindrique de refoulement 18, sont placés dans le même plan vertical P3, correspondant au plan vertical médian du corps de pompe 2 (figure 2).

Conformément à l'invention, le corps de pompe 2 comporte des moyens détaillés ci-après qui autorisent le réglage des cotes précitées C1, C2 et C3, cela de manière continue, chacun sur une plage de valeur et indépendamment les unes des autres.

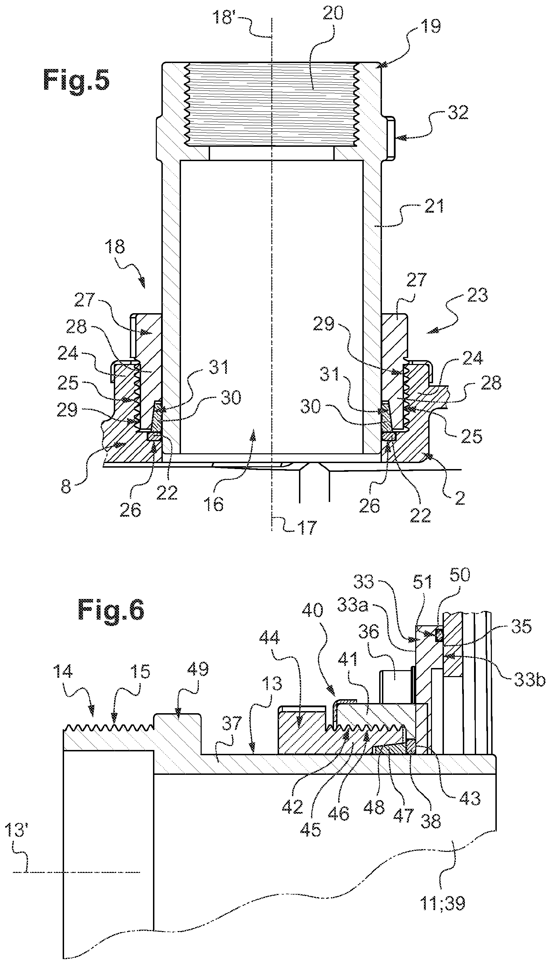

Pour cela, dans l'exemple illustré, et tel que détaillé sur la figure 5, la structure cylindrique de refoulement 18 comprend un raccord cylindrique de refoulement 21 qui est monté avec une possibilité de mobilité axiale au travers d'un joint d'étanchéité annulaire 22 associé à l'orifice de refoulement 16.
Cette structure cylindrique de refoulement 18 est associée à des moyens de compression 23 adaptés pour comprimer de manière réversible le joint d'étanchéité 22, entre le pourtour de l'orifice de refoulement 16 et la surface externe du raccord cylindrique de refoulement 21, de manière à réaliser simultanément le verrouillage axial de ce raccord cylindrique 21 et l'étanchéité.

Plus précisément, l'orifice de refoulement 16 ménagé dans le corps de pompe 2 se prolonge vers l'extérieur par un tronçon cylindrique de refoulement 24, ici monobloc, qui est muni d'un taraudage 25, et dont le diamètre interne est supérieur au diamètre de l'orifice de refoulement 16, pour ménager un épaulement interne 26 orienté vers l'extérieur.

De plus, les moyens de compression précités 23 comprennent un écrou de serrage 27 destiné à ceinturer le raccord cylindrique de refoulement 21 et muni d'une extension 28 comportant un filetage extérieur 29 agencé pour coopérer avec le taraudage 25 du tronçon cylindrique de refoulement 24, de manière adaptée pour que son extrémité libre vienne comprimer le joint d'étanchéité 22 contre l'épaulement précité 26, et contre la surface externe du raccord cylindrique de refoulement 21, cela par l'intermédiaire d'une bague conique de serrage 30.
Cette bague conique 30, de préférence de type « ouverte » (c'est-à-dire non continue), est indépendante de l'écrou de serrage 27 et elle est interposée entre le joint annulaire 22 et un pan incliné 31 ménagé dans la surface interne dudit écrou de serrage 27.

Le diamètre externe du raccord cylindrique de refoulement 21 correspond, au jeu près, au diamètre intérieur de l'écrou de serrage 27, de la bague de serrage 30 avant compression, du joint annulaire 22 avant compression, et de l'orifice 16 ménagé dans la paroi du corps de pompe 2.

On comprend donc qu'avant serrage complet de l'écrou 27, le raccord cylindrique de refoulement 21 peut coulisser axialement le long de l'axe 18', cela de manière continue, sur une plage de valeur définie, grâce à la coopération de surfaces lisses glissant les unes sur les autres ;
et après avoir ajusté la cote de hauteur C2 recherchée du plan horizontal P2 (en particulier en fonction du positionnement du raccord de refoulement RF), cette cote C2 peut être verrouillée par le serrage de l'écrou 27.

Lors de ce serrage de l'écrou 27 sur le tronçon cylindrique de refoulement 24, le taraudage 25 coopère avec le filetage 29. L'extension 28 de l'écrou 27 pousse la bague conique 30 (par le pan incliné 31) vers le corps de pompe 2, et la bague conique 30 comprime le joint 22 contre l'épaulement 26 et contre la surface externe du raccord cylindrique 21, de manière à verrouiller la position de ce dernier et assurer l'étanchéité de la liaison (ce verrouillage et cette étanchéité étant réalisés par la bague 30 et le joint 22).
La bague conique ouverte 30 permet d'optimiser les caractéristiques de serrage.

Au niveau de l'extrémité libre 19 du raccord cylindrique 21, on remarque la présence des moyens 20 pour le raccordement au raccord de refoulement RF, ici en forme de taraudage.

Sur la périphérie de la face externe du raccord cylindrique de refoulement 21, on remarque encore la présence d'une structure saillante polygonale 32 (en l'occurrence hexagonale) qui permet de maintenir ledit raccord cylindrique (par exemple au moyen d'une clé ou d'une pince), lors des opérations de vissage et de dévissage de l'écrou 27 et du raccord de refoulement RF.
Cette structure saillante polygonale 32 est située du côté de l'extrémité libre 19 du raccord cylindrique 21.

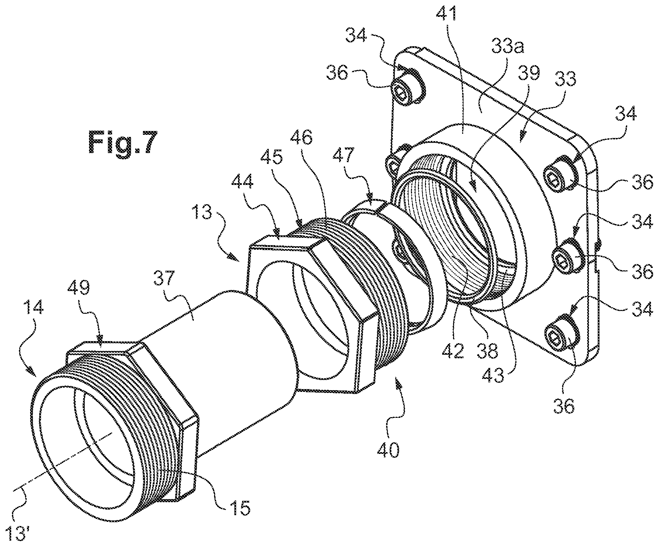

D'autre part, au niveau de la partie avant 5 du corps de pompe 2, tel que détaillé sur les figures 6 et 7, la structure cylindrique d'aspiration 13 a une structure similaire à celle de la structure cylindrique de refoulement 18, à la différence qu'elle comporte une platine intermédiaire 33 pour sa fixation sur le corps de pompe 2, cette platine intermédiaire 33 étant prévue réglable en hauteur (pour permettre un réglage de la cote de hauteur C1), et l'orifice d'aspiration 11 étant surdimensionné par rapport au diamètre de ladite structure cylindrique d'aspiration 13, toujours pour permettre ce réglage de hauteur de la cote C1.

Pour cela, l'orifice d'aspiration 11 ménagé dans le corps de pompe 2 est de forme générale oblongue avec son grand axe orienté verticalement, parallèlement à l'axe 18' de la structure cylindrique de refoulement 18, et dans le plan vertical médian P3 du corps de pompe 2.

De son côté, la platine intermédiaire 33 a une forme générale carrée ou rectangulaire et elle comporte des orifices oblongs 34 pour sa fixation sur la face extérieure de la partie avant 5 du corps de pompe 2, en regard de l'orifice d'aspiration 11 et contre un emplacement de réception 35 aménagé à cet effet.

Cette fixation de la platine intermédiaire 33 est réalisée au moyen de vis 36 qui coopèrent avec des orifices taraudés ménagés dans l'emplacement 35 du corps de pompe 2, sur le pourtour de l'orifice d'aspiration 11.

Le grand axe des orifices oblongs 34 s'étend verticalement, parallèlement au grand axe de l'orifice d'aspiration 11, pour permettre le réglage vertical recherché de la platine intermédiaire 33, cela de manière continue et sur une plage de valeur (correspondant à la plage de mobilité des vis 36 le long des orifices oblongs 34).

De manière similaire à la structure cylindrique de refoulement 18, la structure cylindrique d'aspiration 13 comprend un raccord cylindrique d'aspiration 37 qui est monté avec une possibilité de mobilité axiale (le long de l'axe horizontal 13') au travers d'un joint d'étanchéité annulaire 38 associé à un orifice 39 ménagé dans la platine intermédiaire 33 (placé en correspondance de l'orifice d'aspiration 11 et pouvant être assimilé à ce dernier).

Le diamètre de l'orifice 39 correspond à peu près au diamètre interne du raccord cylindrique d'aspiration 37, et aussi au petit axe de l'orifice d'aspiration 11.

En outre, cette structure cylindrique d'aspiration 13 est associée à des moyens de compression 40 adaptés pour comprimer de manière réversible le joint d'étanchéité 38 entre le pourtour de l'orifice d'aspiration 11-39 et la surface externe du raccord cylindrique d'aspiration 37, de manière à réaliser simultanément le verrouillage axial de ce raccord cylindrique 37 et l'étanchéité.

Plus précisément, l'orifice d'aspiration 39 ménagé dans la platine intermédiaire 33 se prolonge, du côté de la face externe 33a de ladite platine 33, par un tronçon cylindrique d'aspiration 41 qui est muni d'un taraudage 42 et dont le diamètre interne est supérieur au diamètre interne de l'orifice 39, pour ménager un épaulement interne 43 orienté vers l'extérieur.

De leur côté, les moyens de compression 40 comprennent un écrou de serrage 44 destiné à ceinturer le raccord cylindrique d'aspiration 37 et qui est muni d'une extension 45 comportant un filetage extérieur 46 agencé pour coopérer avec ledit taraudage 42 du tronçon cylindrique d'aspiration 41, de manière adaptée pour que son extrémité libre vienne comprimer ledit joint d'étanchéité 38 contre l'épaulement précité 43, et contre la surface externe dudit raccord cylindrique d'aspiration 37, cela par l'intermédiaire d'une bague conique de serrage 47.

Cette bague conique 47, de préférence du type « ouverte » (c'est-à-dire non continue) est indépendante de l'écrou de serrage 44 et elle est interposée entre le joint annulaire 38 et un pan incliné 48 ménagé dans la surface interne de l'écrou 44.

Le diamètre externe du raccord cylindrique d'aspiration 37 correspond, au jeu près, au diamètre interne de l'écrou de serrage 44, de la bague de serrage 47 avant compression, du joint annulaire 38 avant compression, et de l'orifice 39 ménagé dans la platine intermédiaire 33.

On comprend donc, qu'avant serrage complet de l'écrou 44, le raccord cylindrique d'aspiration 37 peut coulisser axialement le long de l'axe 13' et de manière continue, sur une plage de valeur définie, grâce à la coopération de surfaces lisses glissant les unes sur les autres ;
et après avoir ajusté la cote de distance C3 recherchée du plan vertical P1, cette cote C3 peut être verrouillée par le serrage de l'écrou 44.

Lors du serrage de l'écrou 44 sur le tronçon cylindrique d'aspiration 37, le taraudage 42 coopère avec le filetage 46 ; l'extension 45 de l'écrou 44 pousse la bague conique 47 (par le pan incliné 48) vers le corps de pompe 2, et la bague conique 47 comprime le joint 38 contre l'épaulement 43 et contre la surface externe du raccord cylindrique 37, de manière à verrouiller la position de ce dernier et assurer l'étanchéité de la liaison (ce verrouillage et cette étanchéité étant réalisés par la bague 47 et le joint 38).

Là encore, la bague conique ouverte 47 permet d'optimiser les caractéristiques de serrage.

Au niveau de l'extrémité libre 14 du raccord cylindrique d'aspiration 37, on remarque la présence des moyens 15 pour le raccordement du raccord d'aspiration RA, ici en forme de filetage.

Sur la périphérie de la face externe du raccord cylindrique d'aspiration 37, on remarque encore la présence d'une structure saillante polygonale 49 (en l'occurrence hexagonale) qui permet de maintenir ledit raccord cylindrique 37 (par exemple au moyen d'une clé ou d'une pince) lors des opérations de vissage et de dévissage de l'écrou 44 et du raccord d'aspiration RA.

Cette structure saillante polygonale 49 est ménagée du côté de l'extrémité libre 14 du raccord cylindrique d'aspiration 37.

Un joint d'étanchéité 50 assure l'étanchéité du montage de la platine 33 sur l'emplacement 35 du corps de pompe 2. Ce joint d'étanchéité 50 est logé dans une gorge adaptée 51, ménagée dans la face arrière 33b de la platine 33 (destinée à venir en regard de l'emplacement 35 du corps de pompe 2).
La gorge 51 et le joint d'étanchéité 50 s'étendent sur la périphérie de l'orifice 39.
Dans une variante de réalisation, cette gorge et le joint d'étanchéité qu'elle réceptionne, peuvent être ménagés sur l'emplacement 35 du corps de pompe 2.

On comprend que les orifices oblongs 34 pour la fixation de la platine intermédiaire 33 permettent un réglage de la cote de hauteur C1 de l'axe 13' du raccord cylindrique d'aspiration 37.

Une telle pompe de filtration 1 permet le réglage des cotes C1, C2 et C3 indépendamment les unes des autres, cela de manière continue, et chacune sur une plage de valeur, ce qui permet de l'installer sur de nombreuses configurations existantes de raccord d'aspiration RA et de raccord de refoulement RF.

Les fixations d'extrémité des raccords d'aspiration 37 et de refoulement 21 (taraudage ou filetage 15, 20) sont adaptées aux raccords d'aspiration RA et de refoulement RF présents sur le site.

Ces taraudages ou filetages 15, 20 peuvent par exemple être du type taraudé 1"1/2 ou 2", fileté 2"1/4 ou 2"3/4, etc.

Eventuellement, la pompe 1 proposée à la vente peut être associée à une pluralité de types de raccords d'aspiration 37 et de refoulement 21, à utiliser selon le type de raccord RA, RF en présence.

Plusieurs types de platines 33, avec un positionnement différent de l'orifice 39 peuvent aussi être proposés, à utiliser en fonction de la cote C1 recherchée. Cette ou ces platines 33 peuvent être prévues aptes à être pivotées à 180°, de manière à augmenter encore les possibilités de réglage.

A titre de variante, le tronçon cylindrique d'aspiration 41 peut être réalisé monobloc avec le corps de pompe 2, comme le tronçon cylindrique de refoulement 24. Dans ce cas, la structure cylindrique d'aspiration 13 ne comporte pas de platine intermédiaire 33. Le réglage de la cote de hauteur C1 peut alors être réalisé par des moyens de réglage en hauteur du corps de pompe 2, par exemple au moyen de pieds réglables en hauteur.

Encore à titre de variante, l'extrémité des écrous de serrage 27 et 44 peut être adaptée pour assurer la compression directe des joints d'étanchéité 22 et 38.

## Revendications

1. Pompe de filtration pour piscine (1) comprenant un corps de pompe (2) apte à reposer sur un support (S) horizontal, lequel corps de pompe (2) comporte un logement (7) pour un système de préfiltration, ainsi que des moyens pour la réception d'un moteur (3), et est muni :
- d'un orifice d'aspiration (11, 39), lequel orifice d'aspiration (11, 39) est positionné en regard dudit logement (7) pour le système de préfiltration, et est prolongé par une structure cylindrique d'aspiration (13), d'axe horizontal (13') dont l'extrémité libre (14) s'étend dans un plan vertical (P1), et est munie de moyens (15) pour son raccordement à un raccord d'aspiration (RA), et
- d'un orifice de refoulement (16), lequel orifice de refoulement (16) est prolongé par une structure cylindrique de refoulement (18), d'axe vertical (18'), dont l'extrémité libre (19) s'étend dans un plan horizontal (P2), et est munie de moyens (20) pour son raccordement à un raccord de refoulement (RF),
l'axe horizontal (13') de ladite structure cylindrique d'aspiration (13) étant destiné à s'étendre selon une cote de hauteur C1 par rapport audit support horizontal (S) dudit corps de pompe (2),
ledit plan horizontal (P2) de l'extrémité libre (19) de ladite structure cylindrique de refoulement (18) étant destiné à s'étendre selon une cote de hauteur C2 par rapport
audit support horizontal (S),
ledit plan vertical (P1) de l'extrémité libre (14) de ladite structure cylindrique d'aspiration (13) et ledit axe vertical (18') de ladite structure cylindrique de refoulement (18) étant séparés d'une cote de longueur C3, et lesdits axes (13', 18') desdites structures cylindriques d'aspiration et de refoulement (13, 18) étant situés dans le même plan vertical (P3),
**caractérisée en ce que** ledit corps de pompe (2) comporte des moyens (11, 33, 34, 39) autorisant le réglage de ladite cote C1, des moyens (16, 18, 21, 22) autorisant le réglage de ladite cote C2,
et des moyens (11, 13, 37, 38, 39) autorisant le réglage de ladite cote C3, de manière continue, chacune sur une plage de valeurs, et indépendamment les unes des autres.

2. Pompe de filtration (1) selon la revendication 1, **caractérisée en ce que** ladite structure cylindrique de refoulement (18) comprend un raccord cylindrique de refoulement (21) monté avec une possibilité de mobilité axiale au travers d'un joint d'étanchéité annulaire (22) associé audit orifice de refoulement (16), pour permettre le réglage de ladite cote C2.

3. Pompe de filtration (1) selon la revendication 2, **caractérisée en ce que** ladite structure cylindrique de refoulement (18) comporte des moyens de compression (23) pour comprimer de manière réversible ledit joint d'étanchéité (22) entre le pourtour dudit orifice de refoulement (16) et la surface externe dudit raccord cylindrique de refoulement (21), de manière à réaliser simultanément le verrouillage axial dudit raccord cylindrique de refoulement (21) et l'étanchéité.

4. Pompe de filtration (1) selon la revendication 3, **caractérisée en ce que** ledit orifice de refoulement (16) du corps de pompe (2) se prolonge vers l'extérieur par un tronçon cylindrique de refoulement (24) muni d'un taraudage (25), le diamètre interne dudit tronçon cylindrique de refoulement (24) étant supérieur au diamètre dudit orifice de refoulement (16) pour ménager un épaulement interne (26) orienté vers l'extérieur, et **en ce que** lesdits moyens de compression (23) comprennent un écrou de serrage (27) destiné à ceinturer ledit raccord cylindrique de refoulement (21) et muni d'une extension (28) comportant un filetage extérieur (29) destiné à coopérer avec ledit taraudage (25) dudit tronçon cylindrique de refoulement (24), de manière adaptée pour que son extrémité libre vienne comprimer, directement ou indirectement, ledit joint d'étanchéité (22) contre ledit épaulement interne (26) et contre la surface externe dudit raccord cylindrique de refoulement (21).

5. Pompe de filtration (1) selon la revendication 4, **caractérisée en ce qu'**elle comporte une bague conique et ouverte de serrage (30), interposée entre ledit joint d'étanchéité (22) et un pan incliné (31) ménagé dans la surface interne dudit écrou de serrage (27).

6. Pompe de filtration (1) selon l'une quelconque des revendications 4 ou 5, **caractérisée en ce que** ledit tronçon cylindrique de refoulement (24) dudit orifice de refoulement (16) est réalisé monobloc avec le corps de pompe (2).

7. Pompe de filtration (1) selon l'une quelconque des revendications 1 à 6, **caractérisé en ce que** ladite structure cylindrique d'aspiration (13) comprend un raccord cylindrique d'aspiration (37) monté avec une possibilité de mobilité axiale au travers d'un joint d'étanchéité annulaire (38) associé audit orifice d'aspiration (11, 39), pour permettre le réglage de ladite cote C3.

8. Pompe de filtration (1) selon la revendication 7, **caractérisée en ce que** ladite structure cylindrique d'aspiration (13) comporte des moyens de compression (40), pour comprimer de manière réversible ledit joint d'étanchéité (38) entre le pourtour dudit orifice d'aspiration (11, 39) et la surface externe dudit raccord cylindrique d'aspiration (37), de manière à réaliser simultanément le verrouillage axial dudit raccord cylindrique d'aspiration (37) et l'étanchéité.

9. Pompe de filtration (1) selon la revendication 8, **caractérisée en ce que** ledit orifice d'aspiration (11, 39) du corps de pompe (2) se prolonge vers l'extérieur par un tronçon cylindrique d'aspiration (41) muni d'un taraudage (42), le diamètre interne dudit tronçon cylindrique d'aspiration (41) étant supérieur au diamètre dudit orifice d'aspiration (11, 39) pour ménager un épaulement interne (43) orienté vers l'extérieur, et **en ce que** lesdits moyens de compression (40) comprennent un écrou de serrage (44) destiné à ceinturer ledit raccord cylindrique d'aspiration (37) et muni d'une extension (45) comportant un filetage extérieur (46) destiné à coopérer avec ledit taraudage (42) dudit tronçon cylindrique d'aspiration (41), de manière adaptée pour que son extrémité libre vienne comprimer, directement ou indirectement, ledit joint d'étanchéité (38) contre ledit épaulement interne (43) et contre la surface externe dudit raccord cylindrique d'aspiration (37).

10. Pompe de filtration (1) selon la revendication 9, **caractérisée en ce qu'**elle comporte une bague conique et ouverte de serrage (47), interposée entre ledit joint d'étanchéité (38) et un pan incliné (48) ménagé dans la surface interne dudit écrou de serrage (44).

11. Pompe de filtration (1) selon l'une quelconque des revendications 1 à 10, **caractérisée en ce qu'**elle comporte un orifice d'aspiration (11) ménagé dans le corps de pompe (2), surdimensionné par rapport au diamètre de ladite structure cylindrique d'aspiration (13), et **en ce qu'**elle comporte une platine intermédiaire (33), portant ladite structure cylindrique d'aspiration (13), laquelle platine intermédiaire (33) comporte des orifices (34) pour sa fixation au moyen de vis (36) sur ledit corps de pompe (2), lesquels orifices de fixation (34) ont une forme oblongue dont le grand axe est orienté parallèlement audit plan (P3) et audit axe (18') de la structure cylindrique de refoulement (18), pour permettre un réglage de ladite cote C1.

12. Pompe de filtration (1) selon les revendications 11 et 9 en combinaison, **caractérisée en ce que** ladite platine intermédiaire (33) comporte un orifice d'aspiration (39) qui se prolonge par ledit tronçon cylindrique d'aspiration (41) associé audit raccord cylindrique d'aspiration (37) et auxdits moyens de compression (40).

13. Pompe de filtration (1) selon l'une quelconque des revendications 1 à 12, **caractérisée en ce que** lesdits raccords cylindriques d'aspiration (37) et de refoulement (21) comportent une extrémité taraudée (20) ou filetée (15) pour leur raccordement respectif au raccord d'aspiration (RA) et au raccord de refoulement (RF).

14. Pompe de filtration (1) selon l'une quelconque des revendications 1 à 13, **caractérisée en ce que** lesdits raccords cylindriques d'aspiration (37) et de refoulement (21) comportent une structure saillante périphérique (32, 49) à section polygonale, pour leur maintien lors des opérations de vissage et de dévissage des raccords d'aspiration et de refoulement (RA, RF), et éventuellement des écrous de serrage associés (24, 44).

## Patentansprüche

1. Filterpumpe (1) für ein Schwimmbecken, die einen Pumpenkörper (2) aufweist, der dazu ausgelegt ist, auf einem horizontalen Träger (S) zu liegen, wobei der Pumpenkörper (2) eine Aufnahme (7) für ein Vorfiltersystem sowie Mittel für die Aufnahme eines Motors (3) aufweist und mit
- einem Ansaugloch (11, 39), wobei das Ansaugloch (11, 39) gegenüber der Aufnahme (7) für ein Vorfiltersystem angeordnet ist und durch eine zylindrische Ansaugstruktur (13) mit horizontaler Achse (13') verlängert ist, deren freies Ende (14) sich in einer senkrechten Ebene (P1) erstreckt und die mit Mitteln (15) für deren Anschluß an einen Ansauganschluß (RA) versehen ist, und
- einem Abflußloch (16), wobei das Abflußloch (16) durch eine zylindrische Abflußstruktur (18) mit senkrechter Achse (18') versehen ist, deren freies Ende (19) sich in einer horizontalen Ebene (P2) erstreckt und die mit Mitteln (20) für deren Anschluß an einen Abflußanschluß (RF) versehen ist,
versehen ist,
wobei die horizontale Achse (13') der zylindrischen Ansaugstruktur (13) dazu bestimmt ist, sich in einer Höhe C1 in Bezug auf den horizontalen Träger (S) des Pumpenkörpers (2) zu erstrecken, wobei die horizontale Ebene (P2) des freien Endes (19) der zylindrischen Abflußstruktur (18) dazu bestimmt ist, sich in einer Höhe C2 in Bezug auf den horizontalen Träger (S) zu erstrecken, wobei die senkrechte Ebene (P1) des freien Endes (14) der zylindrischen Ansaugstruktur (13) und die senkrechte Achse (18') der zylindrischen Abflußstruktur (18) durch eine Länge C3 voneinander getrennt sind, und
wobei die Achsen (13', 18') der zylindrischen Ansaug- und der zylindrischen Abflußstruktur (13, 18) in derselben senkrechten Ebene (P3) liegen,
**dadurch gekennzeichnet, daß** der Pumpenkörper (2) Mittel (11, 33, 34, 39), die ein kontinuierliches Einstellen des Maßes C1 ermöglichen, Mittel (16, 18, 21, 22), die ein kontinuierliches Einstellen des Maßes C2 ermöglichen, und Mittel (11, 13, 37, 38, 39), die ein kontinuierliches Einstellen des Maßes C3 ermöglichen, und zwar jeweils in einem Wertebereich und voneinander unabhängig, aufweist.

2. Filterpumpe (1) gemäß Anspruch 1, **dadurch gekennzeichnet, daß** die zylindrische Abflußstruktur (18) einen zylindrischen Abflußanschluß (21) aufweist, der mit der Möglichkeit der axialen Beweglichkeit durch eine dem Abflußloch (16) zugeordnete ringförmige Dichtung (22) montiert ist, um ein Einstellen des Maßes C2 zu ermöglichen.

3. Filterpumpe (1) gemäß Anspruch 2, **dadurch gekennzeichnet, daß** die zylindrische Abflußstruktur (18) Kompressionsmittel (23) aufweist, um die Dichtung (22) in reversibler Weise zwischen dem Umfang des Abflußlochs (16) und der äußeren Oberfläche des zylindrischen Abflußanschlusses (21) zusammenzudrücken, um die axiale Verriegelung des zylindrischen Abflußanschlusses (21) und die Dichtigkeit gleichzeitig herzustellen.

4. Filterpumpe (1) gemäß Anspruch 3, **dadurch gekennzeichnet, daß** sich das Abflußloch (16) des Pumpenkörpers (2) nach außen durch einen mit einem Innengewinde (25) versehenen zylindrischen Abflußabschnitt (24) fortsetzt, wobei der Innendurchmesser des zylindrischen Abflußabschnitts (24) größer als der Durchmesser des Abflußlochs (16) ist, um eine nach innen gerichtete innere Schulter (26) zu bilden,
und dadurch, daß die Kompressionsmittel (23) eine Spannmutter (27) aufweisen, die dazu bestimmt ist, den zylindrischen Abflußanschluß (21) zu umgeben, und die mit einer Verlängerung (28) versehen ist, die mit einem Außengewinde (29) versehen ist, das mit dem Innengewinde (25) des zylindrischen Abflußabschnitts (24) in derart angepaßter Weise zusammenwirken soll, daß dessen freies Ende die Dichtung (22) direkt oder indirekt gegen die innere Schulter (26) und gegen die äußere Oberfläche des zylindrischen Abflußanschlusses (21) zusammendrückt.

5. Filterpumpe (1) gemäß Anspruch 4, **dadurch gekennzeichnet, daß** sie einen konischen und offenen Spannring (30) aufweist, der zwischen der Dichtung (22) und einer in der inneren Oberfläche der Spannmutter (27) gebildeten schrägen Fläche (31) eingefügt ist.

6. Filterpumpe (1) gemäß einem der Ansprüche 4 oder 5, **dadurch gekennzeichnet, daß** der zylindrische Abflußabschnitt (24) des Abflußlochs (16) einstückig mit dem Pumpenkörper (2) gebildet ist.

7. Filterpumpe (1) gemäß einem der Ansprüche 1 bis 6, dadurch gelcennzeichnet, daß die zylindrische Ansaugstruktur (13) einen Ansauganschluß (37) aufweist, der mit der Möglichkeit der axialen Beweglichkeit durch eine dem Ansaugloch (11, 39) zugeordnete ringförmige Dichtung (38) montiert ist, um ein Einstellen des Maßes C3 zu ermöglichen.

8. Filterpumpe (1) gemäß Anspruch 7, **dadurch gekennzeichnet, daß** die zylindrische Ansaugstruktur (13) Kompressionsmittel (40) aufweist, um die Dichtung (38) in reversibler Weise zwischen dem Umfang des Ansauglochs (11, 39) und der äußeren Oberfläche des zylindrischen Ansauganschlusses (37) zusammenzudrücken, um die axiale Verriegelung des zylindrischen Ansauganschlusses (37) und die Dichtigkeit gleichzeitig herzustellen.

9. Filterpumpe (1) gemäß Anspruch 8, **dadurch gekennzeichnet, daß** sich das Ansaugloch (11, 39) des Pumpenkörpers (2) nach außen durch einen mit einem Innengewinde (42) versehenen zylindrischen Ansaugabschnitt (41) fortsetzt, wobei der Innendurchmesser des zylindrischen Ansaugabschnitts (41) größer als der Durchmesser des Ansauglochs (11, 39) ist, um eine nach innen gerichtete innere Schulter (43) zu bilden,
und dadurch, daß die Kompressionsmittel (40) eine Spannmutter (44) aufweisen, die dazu bestimmt ist, den zylindrischen Ansauganschluß (37) zu umgeben, und die mit einer Verlängerung (45) versehen ist, die mit einem Außengewinde (46) versehen ist, das mit dem Innengewinde (42) des zylindrischen Ansaugabschnitts (41) in derart angepaßter Weise zusammenwirken soll, daß dessen freies Ende die Dichtung (38) direkt oder indirekt gegen die innere Schulter (43) und gegen die äußere Oberfläche des zylindrischen, Ansauganschlusses (37) zusammendrückt.

10. Filterpumpe (1) gemäß Anspruch 9, **dadurch gekennzeichnet, daß** sie einen konischen und offenen Spannring (47) aufweist, der zwischen der Dichtung (38) und einer in der inneren Oberfläche der Spannmutter (44) gebildeten schrägen Fläche (48) eingefügt ist.

11. Filterpumpe (1) gemäß einem der Ansprüche 1 bis 10, **dadurch gekennzeichnet, daß** sie ein im Pumpenkörper (2) eingerichtetes Ansaugloch (11) aufweist, das gegenüber dem Durchmesser der zylindrischen Ansaugstruktur (13) überdimensioniert ist, und dadurch, daß sie eine Zwischenplatine (33) aufweist, die die zylindrische Ansaugstruktur (13) trägt, wobei die Zwischenplatine (33) Löcher (34) für deren Befestigung am Pumpenkörpers (2) mittels Schrauben (36) aufweist, wobei die Befestigungslöcher (34) eine langgestreckte Form aufweisen, deren Längsachse zur Ebene (P3) und zur Achse (18') der zylindrischen Abflußstruktur (18) parallel ausgerichtet ist, um ein Einstellen des Maßes C1 zu ermöglichen.

12. Filterpumpe (1) gemäß den miteinander kombinierten Ansprüchen 11 und 9, **dadurch gekennzeichnet, daß** die Zwischenplatine (33) ein Ansaugloch (39) aufweist, das sich durch den zylindrischen Ansaugabschnitt (41) fortsetzt, der dem zylindrischen Ansauganschluß (37) und den Kompressionsmitteln (40) zugeordnet ist.

13. Filterpumpe (1) gemäß einem der Ansprüche 1 bis 12, **dadurch gekennzeichnet, daß** der zylindrische Ansauganschluß (37) und der zylindrische Abflußanschluß (21) ein mit einem Innengewinde (20) bzw. einem Außengewinde (15) versehenes Ende für deren Anschluß an den Ansauganschluß (RA) bzw. Abflußanschluß (RF) aufweisen.

14. Filterpumpe (1) gemäß einem der Ansprüche 1 bis 13, dadurch gelcennzeichnet, daß der zylindrische Ansauganschluß (37) und der zylindrische Abflußanschluß (21) zum Festhalten derselben bei einem Vorgang des Festschraubens oder des Losschraubens des Ansauganschlusses (RA) bzw. des Abflußanschlusses (RF) und eventuell der zughörigen Spannmuttern (24, 44) eine hervorstehende Umfangsstruktur (32, 49) mit vieleckigem Querschnitt aufweisen.

## Claims

1. Filtration pump (1) for a swimming pool comprising a pump body (2) suitable for resting on a horizontal support (S), said pump body (2) comprising a lodging space (7) for a pre-filtering system as well as means for receiving a motor (3), and is provided with
- a suction port (11, 39), said suction port (11, 39) being positioned facing the lodging space (7) for the pre-filtering system, and being extended by a cylindrical suction structure (13) with a horizontal axis (13'), the free end (14) of which extends in a vertical plane (P1) and is provided with means (15) for being coupled to a suction coupling (RA), and
- a discharge port (16), said discharge port (16) being extended by a cylindrical discharge structure (18) with a vertical axis (18'), the free end (19) of which extends in a horizontal plane (P2) and is provided with means (20) for being coupled to a discharge coupling (RF),
the horizontal axis (13') of said cylindrical suction structure (13) being intended to extend according to a height dimension C1 with respect to said horizontal support (S) of said pump body (2),
said horizontal plane (P2) of the free end (19) of the cylindrical discharge structure (18) being intended to extend according to a height dimension C2 with respect to said horizontal support (S),
said vertical plane (P1) of the free end (14) of the cylindrical suction structure (13) and said vertical axis (18') of the cylindrical discharge structure (18) being separated by a length dimension C3,
and said axes (13', 18') of said cylindrical suction structure and discharge structure (13, 18) being situated in the same vertical plane (P3),
**characterized in that** said pump body (2) comprises means (11, 33, 34, 39) allowing the adjustment of said height dimension C1, means (16, 18, 21, 22) allowing the adjustment of said height dimension C2, and means (11, 13, 37, 38, 39) allowing the adjustment of said length dimension C3, continuously, each over a range of values and regardless of the others.

2. Filtration pump (1) according to claim 1, **characterized in that** said cylindrical discharge structure (18) comprises a cylindrical discharge coupling (21) mounted with the possibility of axial mobility through an annular gasket (22) associated to said discharge port (16) for allowing the adjustment of the height dimension C2.

3. Filtration pump (1) according to claim 2, **characterized in that** said cylindrical discharge structure (18) comprises compression means (23) for compressing in a reversible manner said gasket (22) between the circumference of said discharge port (16) and the outer surface of said cylindrical discharge coupling (21), in order to achieve simultaneously the axial locking of said cylindrical discharge coupling (21) and the tightness.

4. Filtration pump (1) according to claim 3, **characterized in that** said discharge port (16) of the pump body (2) extends to the outside by a cylindrical discharge section (24) provided with a tapping (25), the inner diameter of said cylindrical discharge section (24) being greater than the diameter of said discharge port (16) for providing an inner shoulder (26) oriented to the outside, and **in that** said compression means (23) comprises a clamping nut (27) intended to surround said cylindrical discharge coupling (21) and provided with an extension (28) comprising an outer thread (29) intended to cooperate with said tapping (25) of said cylindrical discharge section (24), in an appropriate manner in order that its free end compresses directly or indirectly said gasket (22) against said inner shoulder (26) and against the outer surface of said cylindrical discharge coupling (21).

5. Filtration pump (1) according to claim 4, **characterized in that** it comprises a conical and open compression ring (30) located between said gasket (22) and an inclined surface (31) formed in the inner surface of said clamping nut (27).

6. Filtration pump (1) according to any one of claims 4 or 5, **characterized in that** said cylindrical discharge section (24) of the discharge port (16) is formed as one piece with the pump body (2).

7. Filtration pump (1) according to any one of claims 1 to 6, **characterized in that** said cylindrical suction structure (13) comprises a cylindrical suction coupling (37) mounted with the possibility of axial mobility through an annular gasket (38) associated to said suction port (11, 39), for allowing the adjustment of said length dimension C3.

8. Filtration pump (1) according to claim 7, **characterized in that** said cylindrical suction structure (13) comprises compression means (40) for compressing in a reversible manner said gasket (38) between the circumference of said suction port (11, 39) and the outer surface of said cylindrical suction coupling (37) in order to achieve simultaneously the axial locking of said cylindrical suction coupling (37) and the tightness.

9. Filtration pump (1) according to claim 8, **characterized in that** said suction port (11, 39) of the pump body (2) extends to the outside by a cylindrical suction section (41) provided with a tapping (42), the inner diameter of said cylindrical suction section (41) being greater than the diameter of said suction port (11, 39) for providing an inner shoulder (43) oriented to the outside, and **in that** said compression means (40) comprises a clamping nut (44) intended to surround said cylindrical suction coupling (37) and provided with an extension (45) comprising an outer thread (46) intended to cooperate with said tapping (42) of said cylindrical suction section (41), in an appropriate manner in order that its free end compresses, directly or indirectly, said gasket (38) against said inner shoulder (43) and against the outer surface of said cylindrical suction coupling (37).

10. Filtration pump (1) according to claim 9, **characterized in that** it comprises a conical and open compression ring (47) located between said gasket (38) and an inclined surface (48) formed in the inner surface of said clamping nut (44).

11. Filtration pump (1) according to any one of claims 1 to 10, **characterized in that** it comprises a suction port (11) formed in the pump body (2), being oversized in relation to the diameter of said cylindrical suction structure (13), and **in that** it comprises an intermediate plate (33), carrying said cylindrical suction structure (13), said intermediate plate (33) comprising holes (34) for being fixed to the pump body (2) by means of screws (36), said fixing holes (34) having an elongate shape the major axis of which is oriented parallel to said plane (P3) et to said axis (18') of the cylindrical discharge structure (18), for allowing the adjustment of said height dimension C1.

12. Filtration pump (1) according to claims 11 and 9 combined, **characterized in that** said intermediate plate (33) comprises a suction port (39) which extends by said cylindrical suction section (41) associated to said cylindrical suction coupling (37) and said compression means (40).

13. Filtration pump (1) according to any one of claims 1 to 12, **characterized in that** said cylindrical suction coupling (37) and discharge coupling (21) comprise a tapped end (20) or a threaded end (15) for being coupled respectively to the suction coupling (RA) and to the discharge coupling (RF).

14. Filtration pump (1) according to any one of claims 1 to 13, **characterized in that** said cylindrical suction coupling (37) and discharge coupling (21) comprise a peripheral protruding structure (32, 49) having a polygonal cross-section, for holding them during screwing and unscrewing operations of the suction coupling (RA) and the discharge coupling (RF), and optionally of the associated clamping nuts (24, 44).
